# EUROPÄISCHE PATENTSCHRIFT

(11) **EP 0 505 911 B1**
(45) Veröffentlichungstag und Bekanntmachung des Hinweises auf die Patenterteilung: **12.06.1996**
(21) Anmeldenummer: 92104667.8
(22) Anmeldetag: 18.03.1992
(51) Int. Cl.: H01R 13/52, H01R 13/62, H01R 13/04, H05B 3/56, H05B 3/06, H02G 15/10

(54) **Einrichtung für eine elektrische Leitung**
Device for an electric line
Dispositif pour une conduite électrique

(30) Priorität: 19.03.1991 DE 4108901
(43) Veröffentlichungstag der Anmeldung: 30.09.1992
(73) Patentinhaber: Barlian, Reinhold, D-97980 Bad Mergentheim (DE)
(72) Erfinder: Barlian, Reinhold, W-6990 Bad Mergentheim (DE); Michelbach, Thomas, W-6990 Bad Mergentheim (DE); Fischle, Martin, W-6990 Bad Mergentheim (DE); Wörner, Bernhard, W-8700 Würzburg (DE)

(56) Entgegenhaltungen:
- DE-C- 3 500 232
- FR-A- 2 312 911
- US-A- 3 691 505

## Beschreibung

Die Erfindung betrifft eine Einrichtung zum Anschließen und Verbinden einer elektrischen Leitung mit den Merkmalen des Oberbegriffs des Anspruchs 1.

Eine aus der DE 3500232 C1 bekannte Einrichtung dieser Art weist ein rohrförmiges Gehäuse auf, das an einem Ende eine sogenannte Verschraubungsmuffe mit einer Hülsenschraube besitzt, durch die das Leitungsende in das Gehäuse hineingeführt und festgelegt ist. Am gegenüberliegenden Gehäuseende kann eine weitere Verschraubungsmuffe mit einer Hülsenschraube vorgesehen sein, durch die das Ende einer anderen Leitung ebenfalls in das Gehäuse hineingeführt und festgelegt ist. Außerdem ist in dem Gehäuse eine Dichtung für die Leitung vorgesehen, deren Leitungsenden an einem einen Isolierkörper aufweisenden Verbindungsteil anschließbar sind.

Die FR-A-2585889 offenbart eine lösbare Kupplungseinrichtung mit einem rohrförmigen Gehäuse zur Leitungsendenaufnahme einer elektrische Leitung. Das Gehäuse ist mehrteilig und kann über einen äußeren Gewindering fixiert werden.

Die DE-U-1985038 offenbart eine quergeteilte Verbindungs- und/oder Abzweigmuffe aus thermoplastischem Kunststoff für plastummantelte Fernmeldekabel. Die Verbindungsmuffe besteht aus zwei Muffenkörperteilen mit mehreren Kabeleinführungsstutzen. Die Muffenkörperteile werden ineinandergesteckt und miteinander unlösbar verschweißt, wobei im Bereich der Schweißstelle ein metallischer Stützkörper vorgesehen ist.

Die EP-A-0427022 offenbart einen elektrischen Leitungsverbinder für ein mehradriges Heizkabel, wobei ein Heizkabelanschlußteil und ein Netzkabelanschlußteil vorgesehen sind, die entweder direkt oder über einen Kubusteil miteinander verbunden werden. Die elektrische Verbindung erfolgt durch in Buchsen einzusteckende Stifte. Nach der Montage der betreffenden Heizkabel- bzw. Netzkabelanschlußteile werden die mit dem Kubus aneinanderstoßenden Stirnflächen beispielsweise durch Kleben, Ultraschall- oder Hochfrequenzschweißen untrennbar miteinander verbunden, so daß der Leitungsverbinder nach der Montage nicht mehr zugänglich ist.

Die DE-A-3541937 offenbart eine explosions- und feuersichere Schutzvorrichtung für elektrische Anschlußteile, die ein zylindrisches Gehäuse aufweist, das an jedem der beiden Enden durch Schraubgewinde mit explosionssicheren Stopfbuchsengliedern verbunden ist. An den Enden der Kabel vorgesehene Anschlußelemente sind innerhalb des Gehäuses und der Stopfbuchsenglieder untergebracht und miteinander verbunden.

In der DD-A-16291 ist eine lösbare Verbindung für mehradrige elektrische Leitungen und Kabel dargestellt, die eine quergeteilte Isolierstoffmuffe aufweist, in der die Anschlüsse der Leitungen zusammengesteckt sind. Die beiden Verbindungshälften sind derart mit einem Gießharz ausgefüllt, daß jeder Leiter und Kontakt mit einer elektrischen Isolierung umgossen ist. Dazu besitzt jede der beiden Verbindungshälften stirnseitige Ausnehmungen zur Aufnahme elastischer O-Ringe, durch die die einzelnen Leiter bzw. Kontakte hindurchgeführt sind. Um die O-Ringe zu dichten und die Isolierstoffmuffe zusammenzuhalten, sind am äußeren Umfang der Verbindungshälften Augenlaschen vorgesehen, in denen parallel zur Muffenlängsachse liegende Gewindeschrauben gelagert sind.

Die Aufgabe der Erfindung besteht darin, eine Einrichtung mit den Merkmalen des Oberbegriffs des Anspruchs 1 dahingehend weiterzubilden, daß mit einfachen Mitteln ein kleinbauendes und schnell zu montierendes lösbares Gehäuse hoher Sicherheit für unterschiedliche Kabel und Leitungen erzielt wird.

Diese Aufgabe wird erfindungsgemäß durch die kennzeichnenden Merkmale des Anspruchs 1 gelöst.

Dadurch wird der Vorteil erreicht, daß die beim bekannten Stand der Technik an den Enden des Gehäuses vorgesehenen Muffen- beziehungsweise Kabelverschraubungen entfallen, so daß eine Einsparung an Verschraubungsteilen erzielt wird. Das Gehäuse kann dadurch wesentlich einfacher hergestellt und bedeutend kleiner ausgebildet werden. Es wird dadurch auch ein erheblich geringerer Einbauplatz benötigt und die miteinander zu verbindenden Gehäuseteile können einfacher und schneller zusammengefügt werden, da weniger Verschraubungsteile zu montieren sind, wodurch die Gehäuseeinheit auch eine höhere Sicherheit besitzt.

Zweckmäßige Ausgestaltungen und Weiterbildungen der Erfindung sind durch die Merkmale der Unteransprüche gekennzeichnet.

Weitere Vorteile und wesentliche Einzelheiten der Erfindung sind der nachfolgenden Beschreibung und der Zeichnung zu entnehmen, die in schematischer Darstellung bevorzugte Ausführungsformen als Beispiel zeigt. Es stellen dar:
- FIG. 1: eine erfindungsgemäße Einrichtung mit geschnittenem Gehäuse und darin befindlichem Verbindungsteil in Seitenansicht,
- FIG. 2a: den Verbindungsteil gemäß FIG. 1 in vergrößerter Seitenansicht, teilweise geschnitten,
- FIG. 2b: den Verbindungsteil gemäß FIG. 2a in Draufsicht,
- FIG. 3a: bis 3j die Einrichtung gemäß FIG. 1 bis 2b in verschiedenen Montagestufen,
- FIG. 4: eine erfindungsgemäße Einrichtung ähnlich FIG. 1 in geschnittener Seitenansicht,
- FIG. 5a: den Verbindungsteil gemäß FIG. 4 in vergrößerter Seitenansicht, teilweise geschnitten,
- FIG. 5b: den Verbindungsteil gemäß FIG. 5a in Draufsicht,
- FIG. 6a bis 6h: die Einrichtung gemäß FIG. 4 bis 5b in verschiedenen Montagestufen,
- FIG. 7: eine weitere erfindungsgemäße Einrichtung in Seitenansicht, teilweise geschnitten,
- FIG. 8a bis 8d: die Einrichtung gemäß FIG. 7 in verschiedenen Montagestufen und
- FIG. 9: eine erfindungsgemäße Abzweig-Einrichtung in Y-Form.

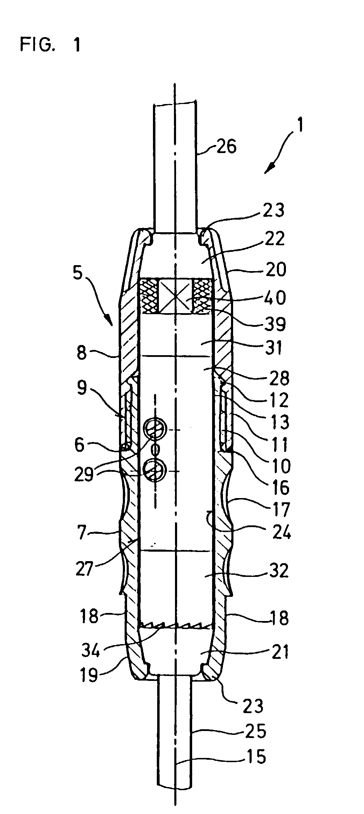

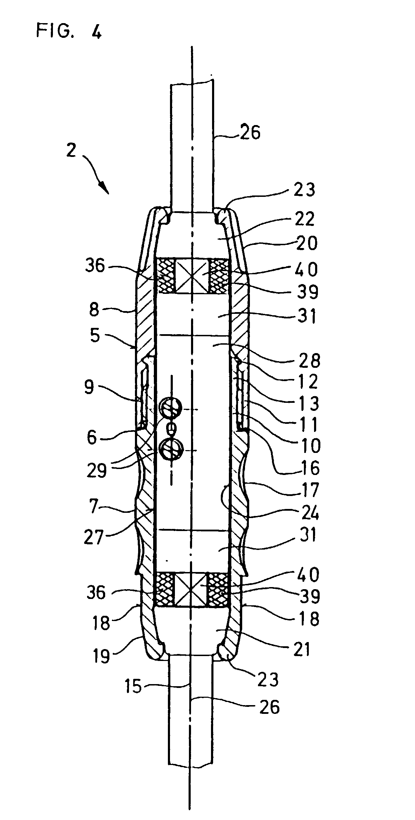

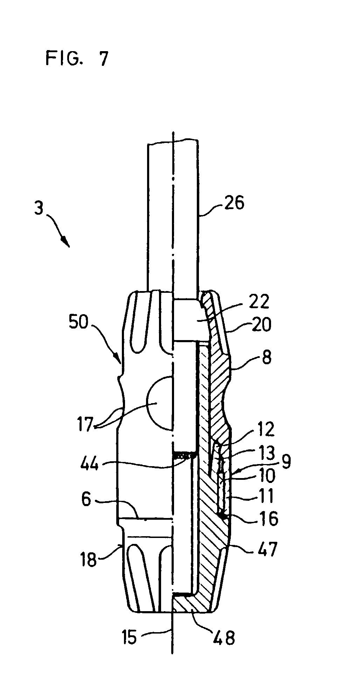

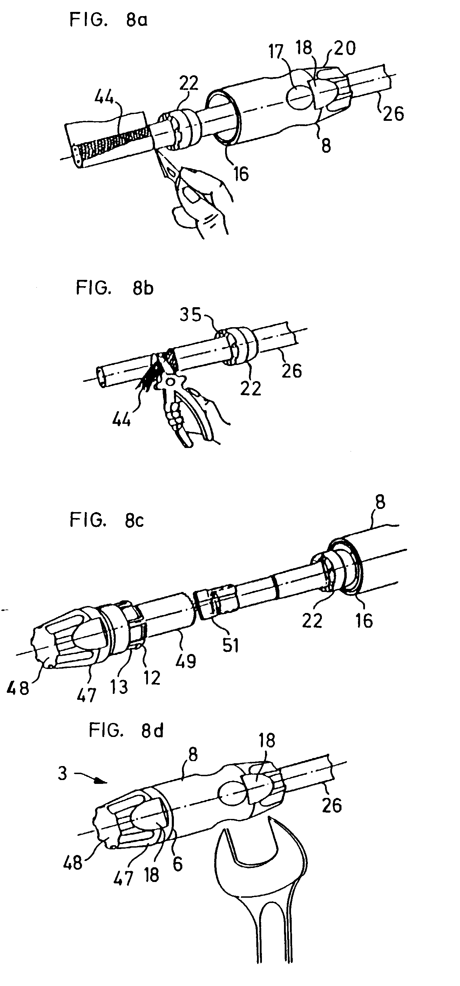

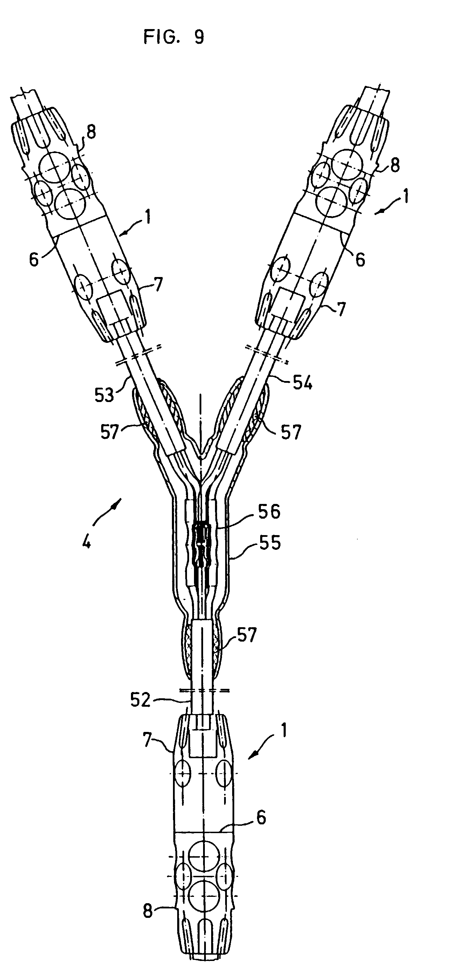

Die in der Zeichnung dargestellte erfindungsgemäße Einrichtung, die als Leitungsgarnitur ausgeführt ist, kann sowohl für normale Elektroleitungen als auch für Heizleiter oder dergleichen vorgesehen sein. Die Garnitur umfaßt einen Leitungsanschluß 1 (FIG. 1 bis 3), einen Leitungsverbinder 2 (FIG. 4 bis 6), einen Leitungsabschluß 3 (FIG. 7 und 8) und einen Leitungsabzweig 4 (FIG. 9).

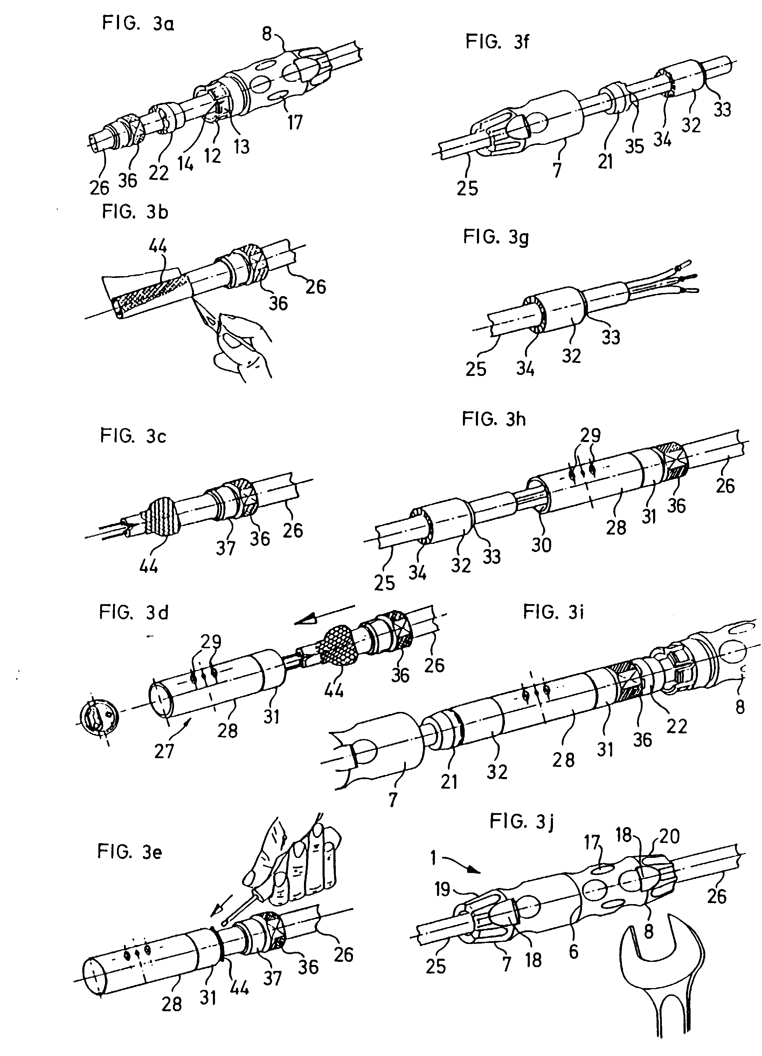

Der Leitungsanschluß 1 und der Leitungsverbinder 2 weisen ein Gehäuse 5 auf, das völlig identisch ist und somit sowohl für den Leitungsanschluß 1 als auch für den Leitungsverbinder 2 verwendet werden kann. Das Gehäuse 5, das zweckmäßig aus einem heiztemperaturbeständigen Kunststoff besteht, so daß es auch für Dauertemperaturen über 80 ^{o}C eingesetzt werden kann, kann zweckmäßig als druckfeste Kapselung ausgebildet sein, so daß es einer etwaigen Explosion eines explosionsfähigen Gemisches im Innern des Gehäues auch bei erhöhten Heiztemperaturen zuverlässig widersteht und eine Übertragung der Explosion auf die das Gehäuse 5 umgebende Atmosphäre mit Sicherheit verhindert ist. Das rohrförmige Gehäuse 5 besitzt eine Teilung 6 und besteht aus zwei miteinander verbindbaren Gehäuseteile 7, 8, die über eine Schraubverbindung 9 ineinandergeschraubt werden können. Diese Schraubverbindung 9 besteht aus einem Gewindeansatz 10, der an dem einen Gehäuseteil 7 angeformt sein kann, und einer Gewindeaufnahme 11, die an dem anderen Gehäuseteil 8 ausgebildet ist und in die der Gewindeansatz 10 hineingeschraubt werden kann. Am freien Ende des Gewindeansatzes 10 kann ein Wulst 12 angeformt sein, der Teil einer Federzunge 13 sein kann, die beispielsweise durch in den Gewindeansatz 10 eingebrachte Längsschlitze 14 ausgebildet sein kann (FIG. 3a). Bei geschlossenem Gehäuse 5 greift der an der quer zur Längsachse 15 bewegbaren Federzunge 13 befindliche Wulst 12 in eine entsprechende Nut des Gehäuseteils 8 ein, wodurch eine schnappartige Verrastung der Teile gegeben ist. Durch diese Verrastung wird die Schraubverbindung 9 gegen ein unbeabsichtigtes Lösen gesichert, so daß die beiden Gehäuseteile 7, 8 nur durch Überwindung der Schnappverrastung auseinandergeschraubt werden können.

Wenn die beiden Gehäuseteile 7, 8 fest zusammengeschraubt sind (FIG. 1), stoßen die Gehäuseteile 7, 8 in der Teilung 6 mit Stirnwänden aneinander, so daß praktisch ein spaltfreier Stoß gebildet ist. Um das Gehäuse 5 einwandfrei abzudichten, kann zusätzlich ein Dichring 16 in der Teilung 6 vorgesehen sein, der zweckmäßig in einer Nut der Stirnwand eines der beiden Gehäuseteile 7, 8, vorzugsweise des Gehäuseteils 8, gelagert sein kann. Wie insbesondere den FIG. 1 und 4 zu entnehmen ist, kann die Teilung 6 vorteilhaft in der Mitte des Gehäuses 5 vorgesehen sein.

Für die Montage der Gehäuseteile 7, 8 kann es günstig sein, an deren Außenseiten Griffmulden 17 auszubilden, so daß beim Verschrauben von Hand ein einwandfreier Zugriff möglich ist. Darüber hinaus kann es günstig sein, eine oder mehrere Schlüsselflächen 18 an den Gehäuseteilen 7, 8 auszubilden, an denen ein Maulschlüssel oder dergleichen Hilfswerkzeug für eine größere Kraftübertragung beim Verschrauben oder Lösen der Schraubverbindung 9 angesetzt werden kann.

Insbesondere den FIG. 1 und 4 ist weiterhin zu entnehmen, daß an den gegenüberliegenden Enden des Gehäuses 5, also in den sich konisch verjüngenden Endbereichen 19, 20 der Gehäuseteile 7, 8, eine Dichtung 21, 22 angeordnet ist, die aus einem heiztemperaturbeständigen Elastomer bestehen kann. Die Dichtung 21, 22, ist an einem Bund 23 abgestützt, der am Ende der beiden Gehäuseteile 7, 8 so ausgebildet ist, daß die Dichtung 21, 22 im Gehäuse 5 sicher gehalten ist und an der konischen Innenfläche 24 des Endbereichs 19, 20 anliegt. Die Dichtung 21 des Leitungsanschlusses 1 der FIG. 1 umschließt eine Elektroleitung 25, die durch den Endbereich 19 in das Gehäuse 5 hineingeführt ist und über die die elektrische Betriebsspannung zugeführt werden kann. Auf der gegenüberliegenden Seite ist eine Heizleitung 26 durch den Endbereich 20 in das Gehäuse 5 hineingeführt, wobei die Heizleitung 26 von der Dichtung 22 umschlossen ist. Die Dichtungen 21, 22 umschließen die Leitungen 25, 26 derart fest und eng, daß eine sichere Abdichtung gewährleistet ist.

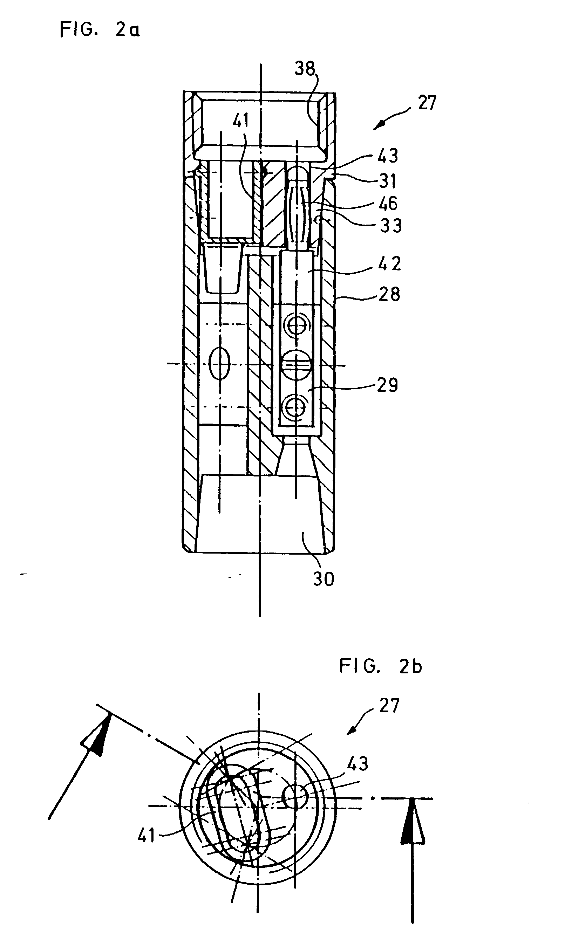

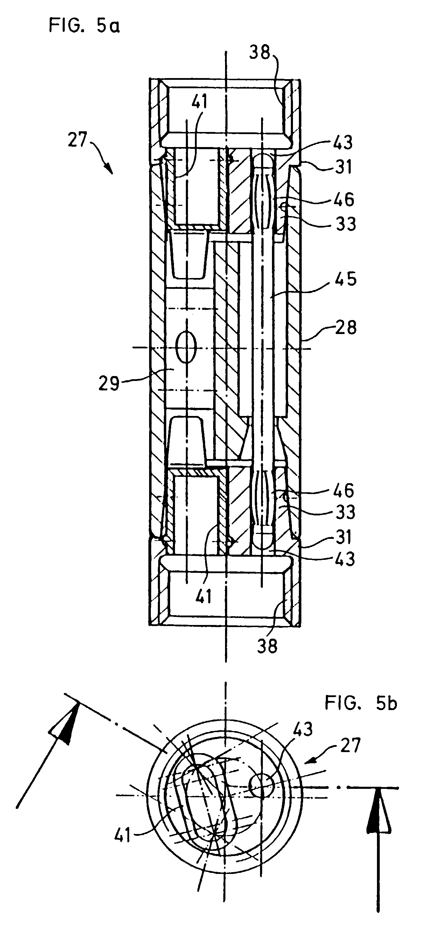

In dem Leitungsanschluß 1 der FIG. 1 und dem Leitungsverbinder 2 der FIG. 4 befindet sich ein Verbindungsteil 27, über den die elektrischen Leiter miteinander verbunden werden können. Der vorzugsweise kreiszylindrische Verbindungsteil 27 liegt im wesentlichen an der Innenfläche des Gehäuses 5 an und kann einen Isolierkörper 28 aufweisen, in dem Schraubklemmen 29 für die Kontaktierung der elektrischen Leiter gelagert sind. Den FIG. 2a und 5a ist zu entnehmen, daß der kreiszylindrische Isolierkörper 28 an den gegenüberliegenden Enden je eine Ausnehmung 30 aufweist, die bevorzugt trichterförmig erweitert ist und in die wahlweise ein Gewindeeinsatz 31 oder ein Distanzstück 32 mittels eines Fußansatzes 33 einsetzbar ist. Der Fußansatz 33 des Distanzstücks 32 kann derart konisch sein, daß beim Einsetzen in die Ausnehmung 30 ein Reibschluß entsteht. Der Fußansatz 33 des Gewindeeinsatzes 31 ist ebenfalls konisch und wird durch Wärmeinbettung formschlüssig im Isolierkörper 28 verankert.

Das im wesentlichen rohrförmige Distanzstück 32 kann vorteilhaft aus einem Kunststoff hergestellt sein und an dem der Dichtung 21 zugewandten Ende eine Zahnung 34 oder dergleichen aufweisen, wodurch ein hoher Reibschluß mit der Dichtung 21 erzielt wird. Die Dichtung 21 kann an ihrer einen Stirnseite stegartige Vorsprünge 35 besitzen kann, die zur Erhöhung des Reibschlusses in die Zahnlücken der Zahnung 34 eingreifen.

Die auf der gegenüberliegenden Seite angeordnete Dichtung 22 kann vorteilhaft genauso ausgebildet sein und ebenfalls Vorsprünge 35 besitzen, die an einer stirnseitigen Rändelung einer Gewindehülse 36 reibschlüssig angreifen, die mit einem Gewindevorsprung 37 in ein Muttergewinde 38 des Gewindeeinsatzes 31 einschraubbar ist.

Die Gewindehülse 36, die für eine leichte Schraubmontage eine Außenrändelung 39 sowie Schlüsselflächen 40 aufweisen kann, kann wie der Gewindeeinsatz 31 aus einem Metall, vorzugsweise Messing hergestellt sein. Die FIG. 1 zeigt, daß im montierten Zustand die Länge des Gewindeeinsatzes 31 und der eingeschraubten Gewindehülse 36 etwa gleich der Länge des Distanzstücks 32 ist. Dabei ist auch zu erkennen, daß beim Zusammenschrauben der beiden Gehäuseteile 7, 8 die Dichtungen 21, 22 fest in die Endbereiche 19, 20 hineingedrückt werden, wodurch ein dichter Abschluß gewährleistet ist.

In dem Gewindeeinsatz 31 kann eine aus Isolierstoff bestehende Führungsbuchse 41 gelagert sein, durch die die Leiter einwandfrei zentriert gelagert im Verbindungsteil 27 hindurchgeführt werden.

Außerdem kann in den Isolierkörper 28 ein Kontaktstift 42 eingesetzt ein, der in eine Bohrung 43 des Gewindeeinsatzes 31 kontaktierend eingreift und beim Leitungsanschluß 1 eine Schraubklemme 29 für den elektrischen Leiter besitzt.

Bei der Montage des Heizbandanschlusses 1 wird zweckmäßig so vorgegangen, wie es in den FIG. 3a bis 3j dargestellt ist. Zunächst wird das Heizband 26 auf das benötigte Maß abgelängt. Dann werden gemäß der FIG. 3a der Gehäuseteil 8, die Dichtung 21 und die Gewindehülse 36 auf die Heizleitung geschoben. Gemäß FIG. 3b wird anschließend der äußere Kunststoffmantel der Heizleitung 26 auf einer Länge von etwa 35 mm entfernt. Sodann wird gemäß FIG. 3c das freigelegte Kupfergeflecht 44 der Heizleitung 26 zurückgeschoben, so daß sich ein Wulst bildet. Danach werden die einzelnen Leiter der Heizleitung 26, wie in FIG.3d dargestellt, abisoliert und durch den Gewindeeinsatz 31 in den Isolierkörper 28 des Verbindungsteils 27 eingeführt und mittels der Schraubklemmen 29 befestigt. Hiernach wird gemäß der Darstellung in FIG. 3e das Kupfergeflecht 44 beispielsweise mit einem Schraubendreher in den Gewindeeinsatz 31 hineingedrückt. Sodann wird die Gewindehülse 36 in den Gewindeeinsatz 31 eingeschraubt und beispielsweise mit einem Gabelschlüssel festgedreht, so daß das Kupfergeflecht 44 für eine gute Kontaktierung fest eingepreßt ist.

Nunmehr wird die Elektroleitung 25 angeschlossen, wobei gemäß FIG. 3f zunächst der Gehäuseteil 7, die Dichtung 22 und das Distanzstück 32 auf die Elektroleitung 25 aufgeschoben werden. Danach werden die einzelnen Leiter der Elektroleitung 25 gemäß FIG. 3g entsprechend freigelegt und gemäß FIG. 3h in den Isolierkörper 28 eingeführt und an den Schraubklemmen 29 angeschlossen. Anschließend wird das Distanzstück 32 mit seinem Fußansatz 33 in die Ausnehmung 30 des Isolierkörpers 28 eingesteckt und die Dichtungen 21, 22 werden gemäß FIG. 3i bis an die Zahnung 34 des Distanzstücks 32 und an die Gewindehülse 36 herangeschoben. Schließlich werden die beiden Gehäuseteile 7, 8 zusammengeschraubt und mit einem Hilfwerkzeug gemäß FIG. 3j fest zusammengedreht, so daß die Schnappverbindung mit dem Wulst 12 einrastet und die Stirnflächen der Gehäuseteile 7, 8 in der Teilung 6 aneinanderliegen, wobei über den im Bereich der Teilung 6 integrierten Dichtring 16 und über die in den Endbereichen 19, 20 fest eingespannten Dichtungen 21, 22 eine hohe Dichtigkeit gewährleistet ist.

Bei dem in der FIG. 4 dargestellten Leitungsverbinder 2 können an beiden Seiten des Gehäuses 5 je eine Heizleitung 26 eingeführt sein. Der im Gehäuse 5 befindliche Verbindungsteil 27 weist dazu an beiden Stirnseiten des Isolierkörpers 28 eingebettete Gewindeeinsätze 31 auf, in die die Gewindehülsen 36 eingedreht sind. In den Endbereichen 19, 20 des Gehäuses 5 befinden sich, wie beim Leitungsanschluß 1, die Dichtungen 21, 22, die an den Gewindehülsen 36 anliegen. Wie die FIG. 8 zeigt, weist der in dem Isolierkörper 28 gelagerte Kontaktstift 45 an beiden Enden ausgebildete Stecker 46 auf, die in die Bohrungen 43 der Distanzstücke 32 kontaktierend eingreifen. Da an beiden Enden des Isolierkörpers 28 je ein Gewindeeinsatz 31 über den konischen Fußansatz 33 in der trichterförmigen Ausnehmung 30 formschlüssig gehalten ist, sind auch zwei Führungsbuchsen 41 vorgesehen, die in je einem der Gewindeeinsätze 31 gelagert sind.

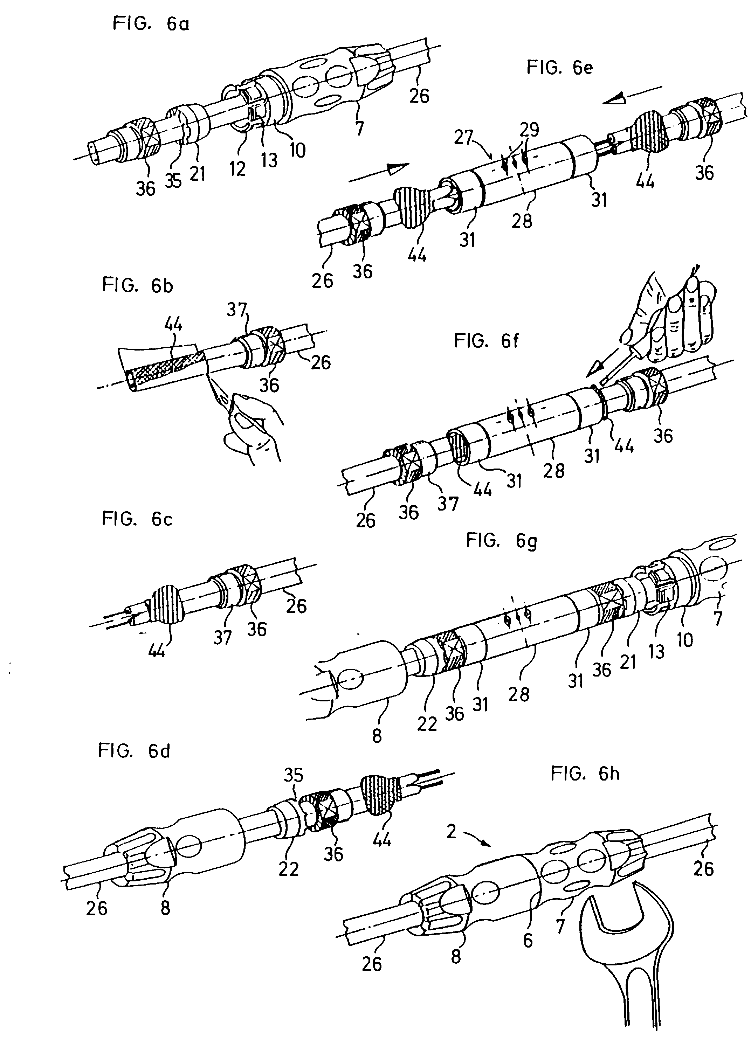

Die Montage des Leitungsverbinders 2 wird wie folgt durchgeführt. Zunächst werden gemäß der FIG. 6a der Gehäuseteil 7, die Dichtung 22 und die Gewindehülse 36 auf die Heizleitung 26 aufgeschoben. Dann erfolgt, wie in den FIG. 6b und 6c dargestellt, das Abisolieren des Heizleitungsendes und das Zurückschieben des Kupfergeflechts 44 zu einem Wulst. Anschließend wird das Ende der anderen Heizleitung 26 wie zuvor beschrieben vorbereitet, indem der Gehäuseteil 8, die Dichtung 22 und die Gewindehülse 36 auf die Heizleitung 26 aufgeschoben und dann das Heizleitungsende gemäß FIG. 6c abisoliert und das Kupfergeflecht 44 hochgeschoben werden. Wie die FIG. 6e zeigt, werden die beiden Heizleitungen dann in den Verbindungsteil 27 eingeführt, wobei die abisolierten Leiter durch die Gewindeeinsätze 31 und die Führungsbuchsen 41 in den Isolierkörper 28 eingesteckt werden, in dem sie über die Schraubklemmen 29 befestigt werden. Danach werden gemäß der FIG. 6f die Kupfergeflechte 44 mit Hilfe eines Schraubendrehers oder dergleichen in den Gewindeeinsatz 31 hineingedrückt und die Gewindehülsen 36 werden mit ihrem Gewindevorsprung 37 in die Gewindeeinsätze 31 eingeschraubt und mit Hilfe eines Maulschlüssels oder dergleichen so fest angezogen, daß eine einwandfreie Kontaktierung des Kupfergeflechts 44 und ein fester Halt der Heizleitungen 26 gewährleistet ist. Sodann werden gemäß FIG. 6g die Dichtungen 21, 22 bis an die Gewindehülsen 36 herangeschoben und der Leitungsverbinder 2 wird, wie in FIG. 6h gezeigt, von Hand und mit Hilfe eines Maulschlüssels zusammengeschraubt und zwar so, daß die Dichtungen 21, 22 in den Endbereichen 19, 20 der Gehäuseteile 7, 8 fest eingespannt sind und die Heizleitungen 26 eng umschließen und die Stirnseiten der Gehäuseteile 7, 8 in der Teilung 6 eng aneinander liegen, wobei der in der Teilung 6 integrierte Dichtring 16 die Gehäuseabdichtung an dieser Stelle garantiert und durch Einrasten des Wulstes 12 der Federzungen-Schnappverbindung 13 eine Sicherung gegen ein unbeabsichtigtes Lösen des Gehäuses 5 gegeben ist.

Der in der FIG. 7 dargestellte Leitungsabschluß 3 weist einen Gehäuseteil 8 mit der Gewindeaufnahme 11 auf, wie er auch bei dem Leitungsanschluß 1 und dem Leitungsverbinder 2 verwendet wird. Der andere Gehäuseteil 47, der mit seinem aus Federzungen 13 gebildeten Gewindeansatz 10, an dem der Wulst 12 ausgebildet ist, in die Gewindeaufnahme 11 des Gehäuseteils 8 eingeschraubt ist, ist an seinem sich konisch verjüngenden Endbereich 19 mittels einer Wand 48 geschlossen, so daß an dieser Gehäuseseite keine Leitungseinführung möglich ist. An der der Wand 48 gegenüberliegenden Seite weist der geschlossene Gehäuseteil 47 einen rohrförmigen Ansatz 49 auf, der sich bis zum konischen Endbereich 19 erstreckt und gegen die Dichtung 22 drückt, so daß diese in dem konischen Endbereich 19 fest eingespannt ist und die Leitung 26 eng umschließt. Das Ende der Leitung 26 kann so weit in das Gehäuse 50 hineinragen, daß es an der Wand 48 des geschlossenen Gehäuseteils 47 zur Anlage kommt.

Bei der Montage des Leitungsabschlusses 3 werden gemäß der FIG. 8a zunächst der Gehäuseteil 8 und die Dichtung 22 auf die Leitung 26 aufgeschoben. Dann wird der äußere Isolationsmantel auf ca. 35 mm Länge abgeschnitten und das so freigelegte Kupfergeflecht 44 wird ebenfalls abgeschnitten (FIG. 8b). Anschließend wird das freigelegte Ende der Leitung 26 mit einem vorzugsweise selbstverschweißenden Isolier- und Dichtband 51 mehrlagig umwickelt, so daß keinerlei Feuchtigkeit in die Leitung 26 eindringen kann (FIG. 8c). Sodann wird der geschlossene Gehäuseteil 47 über das Leitungsende gestülpt und mit dem Gehäuseteil 8 von Hand und mit Hilfe eines Maulschlüssels verschraubt, bis der Wulst 12 der Federzunge 13 in dem Gehäuseteil 8 einrastet und die Teilung 6 spaltfrei geschlossen ist (FIG. 8d) wobei der in der Teilung 6 integrierte Dichtring 16, der in einer Nut an der Stirnseite des Gehäuseteils 8 gelagert ist, die Gehäuseabdichtung in der Teilungsebene gewährleistet. Bezüglich der Dichtungen 21, 22 ist noch anzumerken, daß diese in den Endbereichen 19, 20 bei der Montage des Gehäuses 3 so eingespannt werden, daß im Bereich der Leitungseinführungen ein zünddurchschlagsicherer Spalt gegeben ist, so daß die erfindungsgemäße Einrichtung mit dem druckfest gekapselten Gehäuse 5 nicht nur für normale elektrotechnische Anwendungen, sondern als Ex-geschützte Garnitur in explosionsgefährdeten Bereichen eingesetzt werden kann, wobei die nach der Erfindung multinational zulassungsfähige Garnitur mit einfachen Mitteln baustellenseitig gießharzfrei montiert werden kann und im Bedarfsfalle zur Inspektion und Weiterverwendung zerstörungsfrei demontierbar ist.

Der in der FIG. 9 dargestellte Leitungsabzweig 4 weist drei Leitungsabgänge 52, 53, 54 auf, an denen je ein Leitungsanschluß 1 angeordnet sein kann. Es besteht jedoch auch die Möglichkeit, statt des Leitungsanschlusses 1 einen Leitungsverbinder 2 vorzusehen. Die Leitungsanschlüsse 1 können wie zuvor beschrieben ausgebildet und montiert sein. Der Abzweig selbst kann eine Isolierumhüllung 55 aufweisen, die beispielsweise als Schrumpfschlauch ausgebildet sein kann, der die die einzelnen Elektroleiter kuppelnden Verbindungsstücke 56 umhüllt. An den Enden der beispielsweise Y-förmigen Isolierumhüllung 55, wo die Leitungsabgänge 52, 53, 54 herausgeführt sind, kann eine zusätzliche Isoliermasse oder ein Isolierband 57 derart auf die Leitungsabgänge 52, 53, 54 aufgebracht sein, daß Verdickungen entstehen, so daß sich die Isolierumhüllung 55 beim Aufschrumpfen fest und dicht schließend anschmiegt.

## Patentansprüche

1. Einrichtung zum Anschließen und Verbinden einer elektrischen Leitung (26) insbesondere einer elektrischen Leitung mit einer Heizleitung oder einem Heizkabel, mit einem rohrförmigen Gehäuse (5, 50) zur Leitungsendenaufnahme, einer im Gehäuseendbereich vorgesehenen Dichtung (21,22) für die Leitung und einem einen Isolierkörper (28) aufweisenden Verbindungsteil für die Leitungsenden, dadurch gekennzeichnet, daß das quergeteilte Gehäuse (5, 50) aus zwei Gehäuseteilen (7, 8, 47) gebildet ist, die lösbar miteinander verbindbar und gegen unbeabsichtigtes Lösen gesichert sind, daß an gegenüberliegenden Enden des Isolierkörpers (28) je eine Ausnehmung (30) vorgesehen ist, in die wahlweise ein Gewindeeinsatz (31) oder ein Distanzstück (32) einsetzbar ist, an denen die Dichtung (21, 22) abgestützt ist.

2. Einrichtung nach vorstehendem Anspruch, dadurch gekennzeichnet, daß die zwei zu verbindenden Gehäuseteile (7, 8, 47) über eine Schraubverbindung (9) kuppelbar sind.

3. Einrichtung nach einem der vorstehenden Ansprüche, dadurch gekennzeichnet, daß der eine Gehäuseteil (7, 47) einen Gewindeansatz (10) und der andere Gehäuseteil (8) eine Gewindeaufnahme (11) für den Gewindeansatz (10) aufweist.

4. Einrichtung nach einem der vorstehenden Ansprüche, dadurch gekennzeichnet, daß der eine Gehäuseteil (7, 47) mindestens eine mit dem anderen Gehäuseteil (8) schnappend verrastbare Federzunge (13) aufweist.

5. Einrichtung nach einem der vorstehenden Ansprüche, dadurch gekennzeichnet, daß die Federzunge (13) an dem Gewindeansatz (10) des einen Gehäuseteils (7, 47) angeordnet und quer zur Längsachse (15) des Gehäuses (5, 50) bewegbar ist.

6. Einrichtung nach einem der vorstehenden Ansprüche, dadurch gekennzeichnet, daß Stirnwände der Gehäuseteile (7, 8, 47) in der Teilung (6) zusammenstoßen.

7. Einrichtung nach einem der vorstehenden Ansprüche, dadurch gekennzeichnet, daß zwischen den Stirnwänden in der Teilung (6) des Gehäuses (5, 50) ein Dichtring (16) vorgesehen ist.

8. Einrichtung nach einem der vorstehenden Ansprüche, dadurch gekennzeichnet, daß der Dichtring (16) in einer Nut an der Stirnwand eines der Gehäuseteile (7, 8, 47) gelagert ist.

9. Einrichtung nach einem der vorstehenden Ansprüche, dadurch gekennzeichnet, daß die Teilung (6) etwa in der Mitte des Gehäuses (5) vorgesehen ist.

10. Einrichtung nach einem der vorstehenden Ansprüche, dadurch gekennzeichnet, daß die Gehäuseteile (7, 8, 47) Schlüsselflächen (18) zum Ansetzen eines Hilfswerkzeugs aufweisen.

11. Einrichtung nach einem der vorstehenden Ansprüche, dadurch gekennzeichnet, daß an der Außenseite der Gehäuseteile (7, 8, 47) Griffmulden (17) ausgebildet sind.

12. Einrichtung nach einem der vorstehenden Ansprüche, dadurch gekennzeichnet, daß im Endbereich (19, 20) des Gehäuseteils (7, 8, 47) eine die Leitung (25, 26) eng umschließende Dichtung (21, 22) vorgesehen ist.

13. Einrichtung nach einem der vorstehenden Ansprüche, dadurch gekennzeichnet, daß die Dichtung (21, 22) an einem Bund (23) des Gehäuseteils (7, 8, 47) abgestützt ist.

14. Einrichtung nach einem der vorstehenden Ansprüche, dadurch gekennzeichnet, daß der Endbereich (19, 20) des Gehäuseteils (7, 8, 47) in Richtung zum Bund (23) konisch verjüngt ausgebildet ist.

15. Einrichtung nach einem der vorstehenden Ansprüche, dadurch gekennzeichnet, daß die Dichtung (21, 22) mittels der Schraubverbindung (9) der Gehäuseteile (7, 8, 47) gegen den Bund (23) gedrückt ist.

16. Einrichtung nach einem der vorstehenden Ansprüche, dadurch gekennzeichnet, daß die Ausnehmung (30) des Isolierkörpers (28) trichterförmig erweitert ist und der Gewindeansatz (31) und das Distanzstück (32) einen in die trichterförmige Ausnehmung (30) einsetzbaren Fußansatz (33) aufweisen.

17. Einrichtung nach einem der vorstehenden Ansprüche, dadurch gekennzeichnet, daß in dem Gewindeansatz (31) eine Führungsbuchse (41) für die Leitung (26) vorgesehen ist.

18. Einrichtung nach einem der vorstehenden Ansprüche, dadurch gekennzeichnet, daß die Führungsbuchse (41) aus Isolierstoff besteht und in den Gewindeansatz (31) einsetzbar ist.

19. Einrichtung nach einem der vorstehenden Ansprüche, dadurch gekennzeichnet, daß in den Isolierkörper (28) des Verbindungsteils (27) ein Kontaktstift (42, 45) einsetzbar ist, der in eine Bohrung (43) des Gewindeansatzes (31) kontaktierend eingreift.

20. Einrichtung nach einem der vorstehenden Ansprüche, dadurch gekennzeichnet, daß in ein Muttergewinde (38) des Gewindeansatzes (31) eine Gewindehülse (36) einschraubbar ist, mittels der ein Metallgeflecht (44) der Leitung (26) im Gewindeansatz (31) kontaktierend festklemmbar ist.

21. Einrichtung nach einem der vorstehenden Ansprüche, dadurch gekennzeichnet, daß die Gewindehülse (36) eine Außenrändelung (39) und bevorzugt Schlüsselflächen (40) für ein Hilfswerkzeug sowie eine stirnseitige Rändelung für die Reibschlußanlage der Dichtung (21, 22) aufweist.

22. Einrichtung nach einem der vorstehenden Ansprüche, dadurch gekennzeichnet, daß das Distanzstück (32) hülsenförmig und etwa so lang ist wie der Gewindeansatz (31) und die Hülsenmutter (36).

23. Einrichtung nach einem der vorstehenden Ansprüche, dadurch gekennzeichnet, daß die Dichtung (21, 22) an der Gewindehülse (36) oder dem Distanzstück (32) abgestützt ist.

24. Einrichtung nach einem der vorstehenden Ansprüche, dadurch gekennzeichnet, daß sie als Leitungsanschluß (1) ausgebildet ist, in dessen Gehäuse (5) der Verbindungsteil (27) an der einen Seite den Gewindeansatz (31) und an der gegenüberliegenden Seite das hülsenförmige Distanzstück (32) aufweist und an der einen Seite eine Heizleitung (26) und an der gegenüberliegenden Seite eine die elektrische Betriebsspannung zuführende Elektroleitung (25) hineingeführt ist.

25. Einrichtung nach einem der vorstehenden Ansprüche, dadurch gekennzeichet, daß sie als Leitungsverbinder (2) ausgebildet ist, in dessen Gehäuse (5) der Verbindungsteil (27) an gegenüberliegenden Seiten den Gewindeansatz (31) oder das Distanzstück (32) aufweist und an beiden Gehäuseseiten je eine Heizleitung (26) oder eine Elektroleitung (25) hineingeführt ist.

26. Einrichtung nach einem der vorstehenden Ansprüche, dadurch gekennzeichnet, daß der eine Gehäuseteil (50) am Endbereich mittels einer Wand (48) geschlossen und in Verbindung mit dem anderen Gehäuseteil (8) als Leitungsabschluß (3) ausgebildet ist.

27. Einrichtung nach einem der vorstehenden Ansprüche, dadurch gekennzeichnet, daß der eine geschlossene Gehäuseteil (50) des Leitungsabschlusses (3) einen hülsenförmigen Ansatz (49) aufweist, an dem die Dichtung (22) des anderen Gehäuseteils (8) anliegt.

28. Einrichtung nach einem der vorstehenden Ansprüche, dadurch gekennzeichnet, daß das Ende der Leitung (26) im Leitungsabschluß (3) eine zusätzliche Isolierung (51) gegen Feuchtigkeit aufweist.

29. Einrichtung nach einem der vorstehenden Ansprüche, dadurch gekennzeichnet, daß die Gehäuseteile (7, 8, 47), der Isolierkörper (28) und das Distanzstück (32) aus einem heiztemperaturbeständigen Kunststoff und die Dichtung (21, 22) aus einem heiztemperaturbeständigen Elastomer bestehen.

30. Einrichtung nach einem der vorstehenden Ansprüche, dadurch gekennzeichnet, daß die Leitung (25, 26) in den Gehäuseteilen (7, 8, 47) über die Dichtung (21, 22) mit einem zünddurchschlagsicheren Spalt festgelegt ist und das Gehäuse (5, 50) als dem Druck einer Explosion widerstehende druckfeste Kapselung ausgebildet ist.

31. Einrichtung nach einem der vorstehenden Ansprüche, gekennzeichnet durch eine Ausbildung als Leitungsabzweig (4) mit drei oder mehr Leitungsabgängen (52, 53, 54), die in einer Isolierumhüllung (55) elektrisch miteinander verbunden sind und an deren Enden je ein Leitungsabschluß (1) oder Leitungsverbinder (2) angeordnet ist.

32. Einrichtung nach einem der vorstehenden Ansprüche, dadurch gekennzeichnet, daß der Isolierkörper (28) in Längsrichtung gesehen wahlweise um 180° wendbar in das Gehäuse (5) einsetzbar ist.

## Claims

1. Device for the connecting and joining of an electric lead (26), especially an electric lead to a heating lead or a heating cable, with a tubular casing (5, 50) for holding the lead ends, a packing (21, 22) for the lead, provided in the zone of the end of the casing and a connecting section for the lead ends having an insulator (28), characterized in that the transversely divided casing (5, 50) is formed from two casing sections (7, 8, 47) which can be detachably joined to each other and are decured against unforeseen release, that at opposite ends of the insulator (28) a recess (30) is in each case provided, into which a threaded insert (31) or a distancing piece (32) can optionally be inserted, on which the packing (21, 22) is supported.

2. Device according to the above claim, characterized in that the two casing sections to be joined (7, 8, 47) can be coupled through a screw connection (9).

3. Device according to one of the above claims, characterized in that the one casing section (7, 47) has a threaded connector (10) and the other casing section (8) has a threaded receiver (11) for the threaded connector (10).

4. Device according to one of the above claims, characterized in that the one casing section (7, 47) has at least one spring lug (13) which can be snapped into the other casing section (8).

5. Device according to one of the above claims, characterized in that the spring lug (13) is located on the threaded connector (10) of the one casing section (7, 47) and can be moved transversely to the longitudinal axis (15) of the casing (5, 50).

6. Device according to one of the above claims, characterized in that face walls of the casing sections (7, 8, 47) run up against each other in the division (6).

7. Device according to one of the above claims, characterized in that a sealing ring (16) is provided between the face walls in the division (6) of the casing (5, 50).

8. Device according to one of the above claims, characterized in that the sealing ring (16) is supported in a groove on the face wall of one of the casing sections (7, 8, 47).

9. Device according to one of the above claims, characterized in that the division (6) is provided in about the middle of the casing (5).

10. Device according to one of the above claims, characterized in that the casing sections (7, 8, 47) have key surfaces (18) for putting on an auxiliary mould.

11. Device according to one of the above claims, characterized in that, on the outside of the casing sections (7, 8, 47), handgrip depressions (17) are constructed.

12. Device according to one of the above claims, characterized in that, in the end zone (19, 20) of the casing section (7, 8, 47), a packing (21, 22) tightly enclosing the lead (25, 26) is provided.

13. Device according to one of the above claims, characterized in that the packing (21, 22) is supported on a collar (23) of the casing section (7, 8, 47).

14. Device according to one of the above claims, characterized in that the end zone (19, 20) of the casing section (7, 8, 47) is constructed conically tapered in the direction of the collar (23).

15. Device according to one of the above claims, characterized in that the packing (21, 22) is pressed against the collar (23) by means of the screw connection (9) of the casing sections (7, 8, 47).

16. Device according to one of the above claims, characterized in that the recess (30) of the insulator (28) is widened in a bell shape and the threaded connector (31) and the distancing piece (32) have a foot shoulder (33) which can be inserted into the bell-shaped recess.

17. Device according to one of the above claims, characterized in that a guide bush (41) is provided for the lead (26) in the threaded connector (31).

18. Device according to one of the above claims, characterized in that the guide bush (41) is made of insulation material and can be inserted into the threaded connector (31).

19. Device according to one of the above claims, characterized in that a contact pin (42, 45) can be inserted into the insulator (28) of the connecting section (27), which engages, making contact, in a drilled hole (43) of the threaded connector (31).

20. Device according to one of the above claims, characterized in that a threaded sleeve (36) can be screwed into a nut thread (38) of the threaded connector (31), by means of which a metal braid (44) of the lead (26) can be clamped firmly, making contact, in the threaded connector (31).

21. Device according to one of the above claims, characterized in that the threaded sleeve (36) has an outside knurling (39) and preferably key surfaces (40) for an auxiliary mould, and also a front knurling for the frictional contact of the packing (21, 22).

22. Device according to one of the above claims, characterized in that the distancing piece (32) is sleeve-shaped and is about as long as the threaded connector (31) and the sleeve nut (36).

23. Device according to one of the above claims, characterized in that the packing (21, 22) is supported on the threaded sleeve (36) or the distancing piece (32).

24. Device according to one of the above claims, characterized in that it is constructed as a lead connection (1), in the case (5) of which the connecting section (27) has on the one side the threaded connector (31) and on the opposite side the sleeve-shaped distancing piece (32) and on the one side is led into a heating lead (26) and on the opposite side into an electric lead (25) feeding the electrical operating voltage.

25. Device according to one of the above claims, characterized in that it is constructed as a cable connector (2), in the casing (5) of which the connecting section (27) has the threaded connector (21) or the distancing piece (32) on opposite sides and on the two sides of the casing in each case a heating lead (26) or an electric cable (25) has been led in.

26. Device according to one of the above claims, characterized in that the one casing section (50) is closed at the end zone by means of a wall (48) and is constructed as a line termination (3) in conjunction with the other casing section (8).

27. Device according to one of the above claims, characterized in that the one closed casing section (50) of the line termination (3) has a sleeve-shaped shoulder (49), against which the packing (22) of the other casing section (8) lies.

28. Device according to one of the above claims, characterized in that the end of the lead (26) in the line termination (3) has an additional insulation (51) against moisture.

29. Device according to one of the above claims, characterized in that the casing sections (7, 8, 47), the insulator (28) and the distancing piece (32) are made of a hot-temperature-resistant plastic and the packing (21, 22) is made of a hot-temperature-resistant elastomer.

30. Device according to one of the above claims, characterized in that the cable (25, 26) in the casing sections (7, 8, 47) is set with an ignition-breakthroughproof gap above the packing (21, 22) and the casing (5, 50) is constructed as a pressure-proof encapsulation resisting the pressure of an explosion.

31. Device according to one of the above claims, characterized by a construction as a branching of the cable (4) with three or more line outputs (52, 53, 54) which are joined electrically to each other in an insulation jacket (55) and at the ends of which in each case a line terminator (1) or cable connector (2) is located.

32. Device according to one of the above claims, characterized in that the insulator (28), seen in a longitudinal direction, can be inserted into the casing (5) so that it can optionally be turned through 180°.

## Revendications

1. Dispositif pour raccorder et relier une conduite électrique (26), notamment une conduite électrique avec une conduite de chauffage ou un câble de chauffage, avec un boîtier tubulaire (5, 50) pour recevoir des extrémités de la conduite, une garniture d'étanchéité (21, 22) prévue pour la conduite dans la zone terminale du boîtier et une partie de liaison, comportant un corps isolant (28), pour les extrémités de la conduite, dispositif caractérisé en ce que le boîtier (5, 50), scindé transversalement, est formé de deux parties (7, 8, 47), qui peuvent être reliées ensemble de façon amovible et sont protégées contre une séparation non intentionnelle, en ce qu'aux extrémités opposées du corps isolant (28) est respectivement prévu un évidement (30), dans lequel peuvent au choix être mis en place un insert fileté (31) ou une pièce intercalaire (32), contre lesquels prend appui la garniture d'étanchéité (21, 22).

2. Dispositif selon la revendication précédente, caractérisé en ce que les deux parties de boîtier à relier (7, 8, 47) peuvent être reliées par un vissage (9).

3. Dispositif selon une des précédentes revendications, caractérisé en ce que l'une (7, 47) des parties du boîtier comporte un insert fileté (10) et l'autre partie (8) du boîtier un logement fileté (11) pour l'insert fileté (10).

4. Dispositif selon une des précédentes revendications, caractérisé en ce que l'une des parties (7, 47) du boîtier comporte au moins une languette à ressort (13) enclenchable par déclic avec l'autre partie (8) du boîtier.

5. Dispositif selon une des précédentes revendications, caractérisé en ce que la languette à ressort (13) est disposée sur l'insert fileté (10) de l'une des parties (7, 47) du boîtier et peut se déplacer transversalement par rapport à l'axe longitudinal (15) du boîtier (5, 50).

6. Dispositif selon une des précédentes revendications, caractérisé en ce que des parois frontales des parties de boîtier (7, 8, 47) s'aboutent sur la séparation (6).

7. Dispositif selon une des précédentes revendications, caractérisé en ce qu'entre les parois frontales dans la séparation (6) du boîtier (5, 50), est prévu un anneau d'étanchéité (16).

8. Dispositif selon une des précédentes revendications, caractérisé en ce que l'anneau d'étanchéité (16) est monté dans une gorge sur la paroi frontale d'une des parties de boîtier (7, 8, 47).

9. Dispositif selon une des précédentes revendications, caractérisé en ce que la séparation (6) est prévue à peu près dans le milieu du boîtier (5).

10. Dispositif selon une des précédentes revendications, caractérisé en ce que les parties de boîtier (7, 8, 47) comportent des portées de clé (18) pour la mise en place d'un outil auxiliaire.

11. Dispositif selon une des précédentes revendications, caractérisé en ce que sur le côté externe des parties de boîtier (7, 8, 47) sont formées des encoches de serrage (17).

12. Dispositif selon une des précédentes revendications, caractérisé en ce que dans la zone terminale (19, 20) de la partie de boîtier (7, 8, 47), est prévue une garniture d'étanchéité (21, 22) entourant étroitement la conduite (25, 26).

13. Dispositif selon une des précédentes revendications, caractérisé en ce que la garniture d'étanchéité (21, 22) prend appui contre un collet de butée (23) de la partie de boîtier (7, 8, 47).

14. Dispositif selon une des précédentes revendications, caractérisé en ce que la zone terminale (19, 20) de la partie de boîtier (7, 8, 47) est rétrécie sous forme de cône vers le collet de butée (23).

15. Dispositif selon une des précédentes revendications, caractérisé en ce que la garniture d'étanchéité (21, 22) est pressée contre le collet de butée (23) au moyen du vissage (9) des parties de boîtier (7, 8, 47).

16. Dispositif selon une des précédentes revendications, caractérisé en ce que l'évidement (30) du corps isolant (28) est élargi en forme d'entonnoir, et l'insert fileté (31) ainsi que la pièce intercalaire (32) comportent un insert de base (33) pouvant être mis en place dans l'évidement (30) en forme d'entonnoir.

17. Dispositif selon une des précédentes revendications, caractérisé en ce qu'il est prévu dans l'insert fileté (31) une douille de guidage (41) pour la conduite (26).

18. Dispositif selon une des précédentes revendications, caractérisé en ce que la douille de guidage (41) est en matière isolante et peut être mise en place dans l'insert fileté (31).

19. Dispositif selon une des précédentes revendications, caractérisé en ce que dans le corps isolant (28) de la partie de liaison (27) peut être mise en place une fiche de contact (42, 45), qui vient en prise, en établissant le contact, dans un perçage (43) de l'insert fileté (31).

20. Dispositif selon une des précédentes revendications, caractérisé en ce que, dans un filetage femelle (38) de l'insert fileté (31), peut être vissée une douille filetée (36), au moyen de laquelle un treillis métallique (44) de la conduite (26) peut être bloqué dans l'insert (31) en établissant le contact.

21. Dispositif selon une des précédentes revendications, caractérisé en ce que la douille filetée (36) comporte un moletage externe (39) et de préférence des portées de clé (40) pour un outil auxiliaire, ainsi qu'un moletage côté frontal pour l'installation avec blocage par frottement de la garniture d'étanchéité (21, 22).

22. Dispositif selon une des précédentes revendications, caractérisé en ce que la pièce intercalaire (32) est en forme de douille et est à peu près aussi longue que l'insert fileté (31) et le filetage femelle (36).

23. Dispositif selon une des précédentes revendications, caractérisé en ce que la garniture d'étanchéité (21, 22) prend appui contre la douille filetée (36) ou la pièce intercalaire (32).

24. Dispositif selon une des précédentes revendications, caractérisé en ce qu'il est réalisé sous la forme de raccordement de ligne (1), dans le boîtier (5) duquel la partie de liaison (27) comporte d'un côté l'insert fileté (31) et du côté opposé la pièce intercalaire (32) en forme de douille, et au premier côté est introduite une conduite chauffante (26) et au côté opposé une conduite électrique (25) amenant la tension électrique de fonctionnement.

25. Dispositif selon une des précédentes revendications, caractérisé en ce qu'il est réalisé sous la forme de connecteur de conduites (2) dans le boîtier (5) duquel la partie de liaison (27) comporte aux côtés opposés l'insert fileté (31) ou la pièce intercalaire (32), et aux deux côtés du boîtier est respectivement introduite une conduite chauffante (26) ou une conduite électrique (25).

26. Dispositif selon une des précédentes revendications, caractérisé en ce que l'une (50) des parties de boîtier est fermée à sa zone d'extrémité par une paroi (48), et en liaison avec l'autre partie de boîtier (8), est réalisée sous la forme de terminaison de conduite (3).

27. Dispositif selon une des précédentes revendications, caractérisé en ce que la partie de boîtier fermée (50) de la terminaison de conduite (3) comporte un appendice (49) en forme de manchon, sur lequel s'applique la garniture d'étanchéité (22) de l'autre partie de boîtier (8).

28. Dispositif selon une des précédentes revendications, caractérisé en ce que l'extrémité de la conduite (26) dans la terminaison de conduite (3) comporte une isolation supplémentaire (51) contre l'humidité.

29. Dispositif selon une des précédentes revendications, caractérisé en ce que les parties de boîtier (7, 8, 47), le corps isolant (28) et la pièce intercalaire (32) sont constitués par une matière plastique résistant à une température élevée, et les garnitures d'étanchéité (21, 22) par un élastomère résistant à une température élevée.

30. Dispositif selon une des précédentes revendications, caractérisé en ce que la conduite (25, 26) dans les parties de boîtier (7, 8, 47) est fixée, par l'intermédiaire de la garniture d'étanchéité (21, 22) à un intervalle de protection contre un claquage, et le boîtier (5, 50) est réalisé sous la forme d'un blindage antidéflagrant résistant à la pression d'une explosion.

31. Dispositif selon une des précédentes revendications, caractérisé par une réalisation sous la forme de branchement (4) de conduites, avec trois ou plusieurs départs de conduites (52, 53, 54), qui sont reliées électriquement ensemble et aux extrémités desquelles est prévue une connexion ou une liaison de ces conduites.

32. Dispositif selon une des précédentes revendications, caractérisé en ce que le corps isolant (28), vu en direction longitudinale, peut être mis en place dans le boîtier (5) en pouvant être inversé.
